# EUROPEAN PATENT SPECIFICATION

(11) **EP 1 701 492 B1**
(45) Date of publication and mention of the grant of the patent: **13.08.2008**
(21) Application number: 06251214.0
(22) Date of filing: 07.03.2006
(51) Int. Cl.: H04L 12/56

(54) **Quality of service assurance for IP telephony**
Sicherung der Dienstqualität für IP-telefonie
Assurance de qualité de service pour téléphonie IP

(30) Priority: 08.03.2005 US 659500 P; 11.08.2005 US 201892
(43) Date of publication of application: 13.09.2006
(73) Proprietor: AVAYA TECHNOLOGY LLC, Basking Ridge, NJ 07920-2332 (US)
(72) Inventor: Karacali-Akyamac, Bengi, Bridgewater New Jersey 08807 (US); Meloche, Jean, Madison New Jersey 07940 (US); Karol, Mark John, New Jersey 07704 (US); Krishnan, P., New Jersey 07920 (US)
(74) Representative: Williams, David John

(56) References cited:
- EP-A- 1 499 074
- WO-A-01/01640
- US-A1- 2004 208 162
- US-B1- 6 272 139

## Description

### Reference to Related Applications

This application claims the benefit of U.S. Provisional Application 60/659,500, filed 03/08/2005, which is also incorporated by reference.

### Field of the Invention

The present invention relates to telecommunications in general, and, more particularly, to quality of service in network paths that do not provide quality-of-service guarantees.

### Background of the Invention

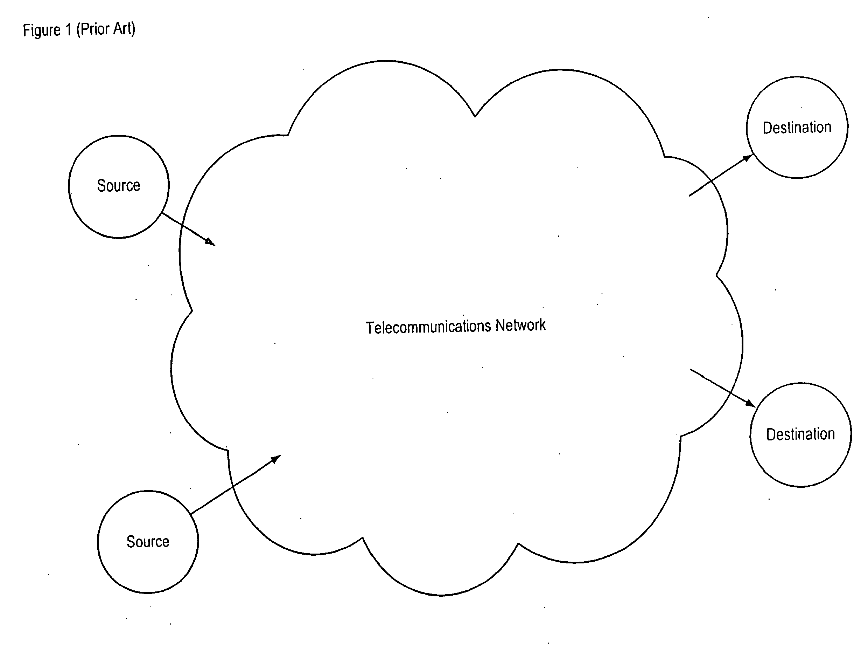

Figure 1 depicts a schematic diagram of a telecommunications network, such as the Internet, which transports data packets from one node to another. When each node in the network can be both a source of packets and a destination too, there are *n*(*n*-1) network paths through the network, wherein n is positive integer that represents the number of nodes in the network. For the purposes of this specification, a **"network path"** is defined as a pair of source and destination nodes in a network.

The service provided by a network path is characterized by its **"quality of service,"** which, for the purposes of this specification, is defined as a function of the bandwidth, error rate, and latency from one node to another.

For the purposes of this specification, the **"bandwidth"** from one node to another is defined as an indication of the amount of information per unit time that can be transported from the first node to the second. Typically, bandwidth is measured in bits or bytes per second. For the purposes of this specification, the **"error rate"** from one node to another is defined as an indication of the amount of information that is corrupted as it travels from the first node to the second. Typically, error rate is measured in bit errors per bit or packets lost per packet. For the purposes of this specification, the **"latency"** from one node to another is defined as an indication of how much time is required to transport information from one node to another. Typically, latency is measured in seconds.

Some applications - for example, e-mail - are generally insensitive to the quality of service provided by the network path but some other applications - particularly telephony and streaming audio and video - are generally very sensitive. While some network paths provide quality-of-service guarantees, many others, including most of those through the Internet, do not. The result is that the provisioning of applications like telephony through the Internet can be problematic.

EP-A-1 499 074 discloses a technique for affecting the routing table at one or more of the rodas of the distribution network.

The need exists, therefore, for an invention that improves the quality of service of a network path.

### Summary of the Invention

In accordance with the present invention there is provided a method according to claim 1.

The present invention is a technique that attempts to provide an improvement in the quality of service of a network path without some of the costs and disadvantages for doing so in the prior art. The illustrative embodiment of the present invention seeks to improve the quality of service of a network path by periodically or sporadically evaluating alternative routes through the network and by sending one or more packets through routes that exhibit, or are believed will exhibit, an acceptable quality of service. Some embodiments of the present invention are particularly well-suited for applications that are sensitive to quality of service issues, such as the provisioning of telephony and streaming audio and video over the Internet.

Typically, neither the source node nor any other node in a packet's path controls its route after it has left the node. Each node usually just passes the packet off to the next node in the network based on the packet's destination address and the node's routing table.

In contrast, the source node in accordance with the illustrative embodiment of the present invention exercises the capability to either:
(1) transmit a packet "directly," in which case the packet will traverse the network on a "nominal" path in well-known fashion, or
(2) transmit the packet "indirectly," in which case the packet will be sent to an intermediate or "richochet" node, which forwards the packet to the destination node.
When the source node has the option sending the packet either:
(1) directly, or
(2) through one or more indirect paths,
the source node can monitor and evaluate the quality of service between the source node and the destination node through each path, and can then intentionally choose a path for the packet that is advantageous. The result is that by giving the source node more than one option for routing the packet through the network, the likelihood is increased that the source node can route the packet through a network path with a satisfactory quality of service.

It should be noted that some embodiments of the present invention can function without changing either the network router's routing tables or how the routers function. Furthermore, the source node can either have an address in the address space of the network or not, and if it does not, it can be either associated with a node having an address in the address space of the network or not (i.e., it can be implemented as a "bump in a wire" which is invisible to the nodes in the network). And still furthermore, in some embodiments of the present invention, a richochet node can be any node in a network, and need have only one link to the network.

The illustrative embodiment comprises: evaluating the quality of service of a first indirect network path from a first node to a second node through a third node, wherein the first network path fails to provide a quality-of-service guarantee; and when the quality of service of the first indirect network path is satisfactory, transmitting a first packet from the first node to the third node; wherein the third node is explicitly instructed to forward the first packet to the second node.

### Brief Description of the Drawings

Figure 1 depicts schematic diagram of a telecommunications network, such as the Internet, which provides the service of transporting data packets from one node to another.

Figure 2 depicts a schematic diagram of the salient components of a network in accordance with the illustrative embodiment of the present invention, and, in particular, depicts the physical resources that compose the network.

Figure 3 depicts the primary nominal path through network 201 from source node 211 to destination node 222, which comprises nodes 11, 15, 20, 24, 29, 25, 22, and 26.

Figure 4 depicts one alternative nominal path through network 201 from source node 211 to destination node 222, which bypasses node 29.

Figure 5 depicts the primary nominal path and all of the alternative nominal paths through network 201 from source node 211 to destination node 222.

Figure 6 depicts the use of extranominal node 3 as a ricochet node for a packet that leaves source node 211 for destination node 222.

Figure 7 depicts a flowchart of the salient tasks associated with the operation of the illustrative embodiment of the present invention.

### Detailed Description

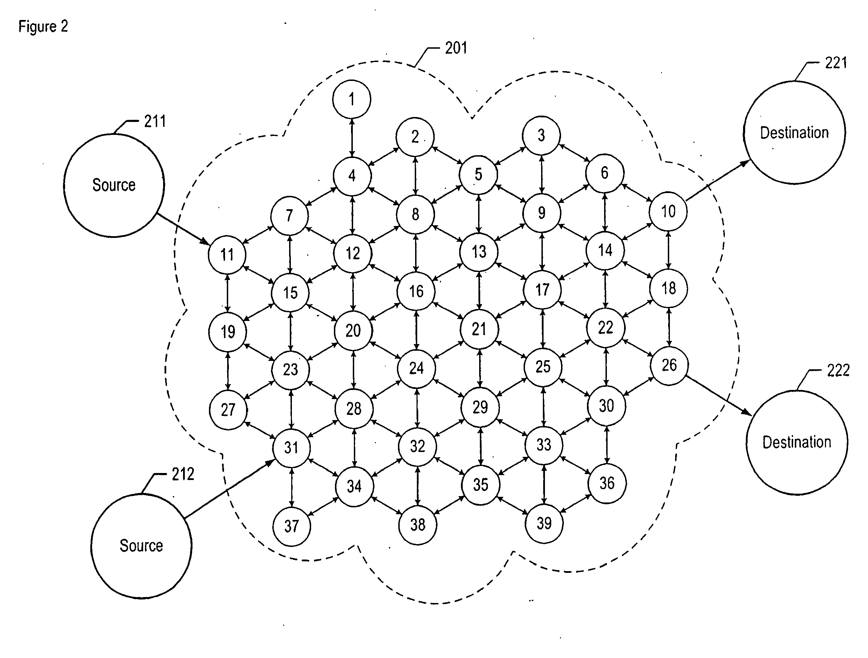

Figure 2 depicts a schematic diagram of the salient components of a network in accordance with the illustrative embodiment of the present invention, and, in particular, depicts the physical resources that compose the network. Network 201 does not provide a quality-of-service guarantee to any packet or stream of packets that it transports from source node 211 to destination node 222, and, therefore, the provisioning of real-time services, such as streaming audio and telephony, from source node 211 to destination node 222, is problematic without the present invention.

Network 201 comprises a plurality of nodes and their physical interconnections, arranged in the topology shown. It will be clear to those skilled in the art, however, after reading this specification, how to make and use alternative embodiments of the present invention with networks that comprise any number of nodes and have any topology. In particular, it will be clear to those skilled in the art, after reading this specification, how to make and use embodiments of the present invention with the Internet.

Each node in network 201 is capable of receiving a packet and of forwarding that packet to another node, in well-known fashion, based on the destination address in the packet. For example, when node 11 receives a packet from source node 211, which packet contains node 26 as its destination address, node 11 must decide which of its adjacent nodes - nodes 7, 15, and 19 - to forward the packet to.

Each node in network 201 decides which adjacent node to give each packet to based on: (1) the destination address in the packet, and (2) a routing table in the node. Table 1 depicts'a.routing table for node 11 in accordance with the illustrative embodiment of the present invention.

**Table 1 - Routing Table For Node 11**

| **Destination node Address** | **Preferred Next Node** | **First Alternative Next Node** | **Second Alternative Next Node** |
|---|---|---|---|
| 1 | 7 | 15 | 19 |
| 2 | 7 | 15 | 19 |
| 3 | 7 | 15 | 19 |
| ... | ... | ... | ... |
| 26 | 15 | 7 | 19 |
| ... | ... | ... | ... |
| 37 | 19 | 15 | 7 |
| 38 | 19 | 15 | 7 |
| 39 | 19 | 15 | 7 |

When all of the resources in the network are functioning and there is little network congestion, each node forwards a packet to the preferred next node listed in the routing table. For example, when node 11 receives a packet with the destination address 26, the preferred next node is node 15.

In contrast, when the preferred next node is not functioning or there is congestion at the preferred next node, the routing node can alternatively route the packet to the first alternative next node. For example, the first alternative next node at node 11 for a packet with the destination address 26 is node 7. And when the first alternative node is not functioning or there is congestion at the first alternative next node, the routing node can route the packet to the second alternative next node. The second alternative next node at node 11 for a packet with the destination address 26 is node 19.

When all of the resources in a network are functioning and there is little congestion, each node forwards a packet to the node listed as the entry for the preferred next node and the packet progresses from one preferred next node to the next and the next and so on until it reaches its destination node. For the purposes of this specification, the **"primary nominal path"** is defined as the chain of preferred next nodes from a source node to a destination node.

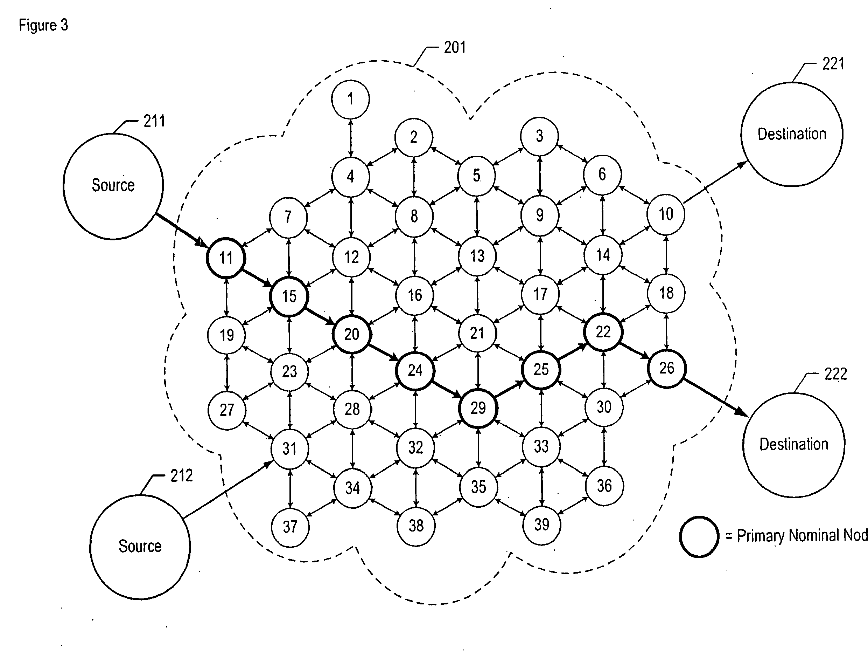

Figure 3 depicts the primary nominal path through network 201 from source node 211 to destination node 222, which comprises nodes 11, 15, 20, 24, 29, 25, 22, and 26. For any pair of source and destination nodes, there always exists one primary nominal path.

When any of the nodes in the primary nominal path are not functioning or are experiencing congestion, a node in the primary nominal path can divert the packet from the primary nominal path onto an "alternative nominal path." For the purposes of this specification, an **"alternative nominal path"** is defined as a chain of preferred and alternative next nodes from a source node to a destination node.

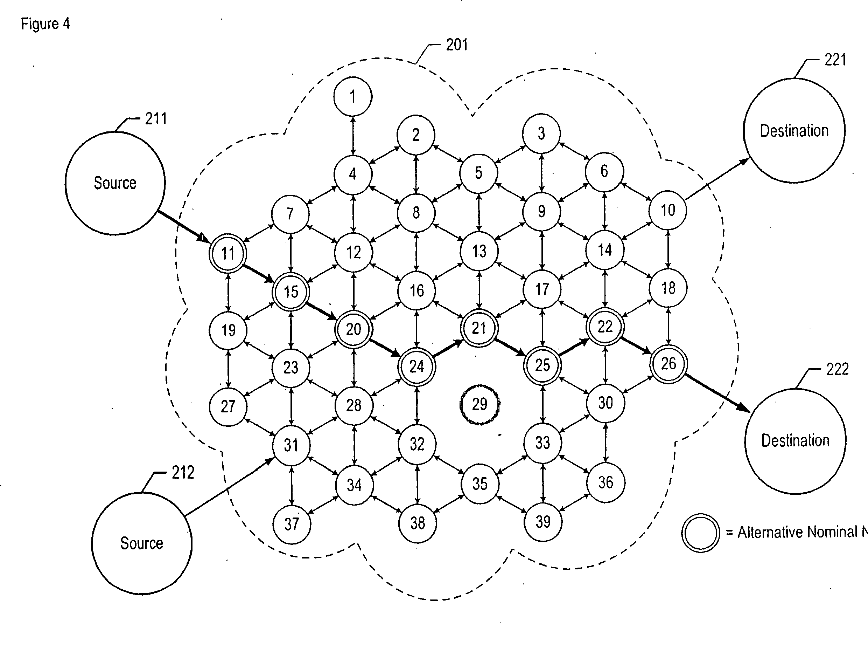

Because any one of the nodes in the primary nominal path can divert the packet off of the primary nominal path and onto an alternative nominal path, each primary nominal path usually has associated with it a plurality of alternative nominal paths. For example, Figure 4 depicts one alternative nominal path through network 201 from source node 211 to destination node 222, which bypasses node 29.

Once the packet has been forwarded onto an alternative nominal path, however, any node in the alternative nominal path can again divert the packet onto yet another alternative nominal path. In some networks, every node in a network is either in
(1) the primary nominal path or (2) at least one alternative nominal path. In some other networks, however, there are nodes that are not in either (1) the primary nominal path or
(2) any of the alternative nominal paths. The difference depends on:
   (i) the number of nodes in the network,
   (ii) the network's topology, and
   (iii) the number of alternative next nodes in each node's routing table.
It will be clear to those skilled in the art how to determine the primary nominal path and the alternative nominal paths between any two nodes in any network.

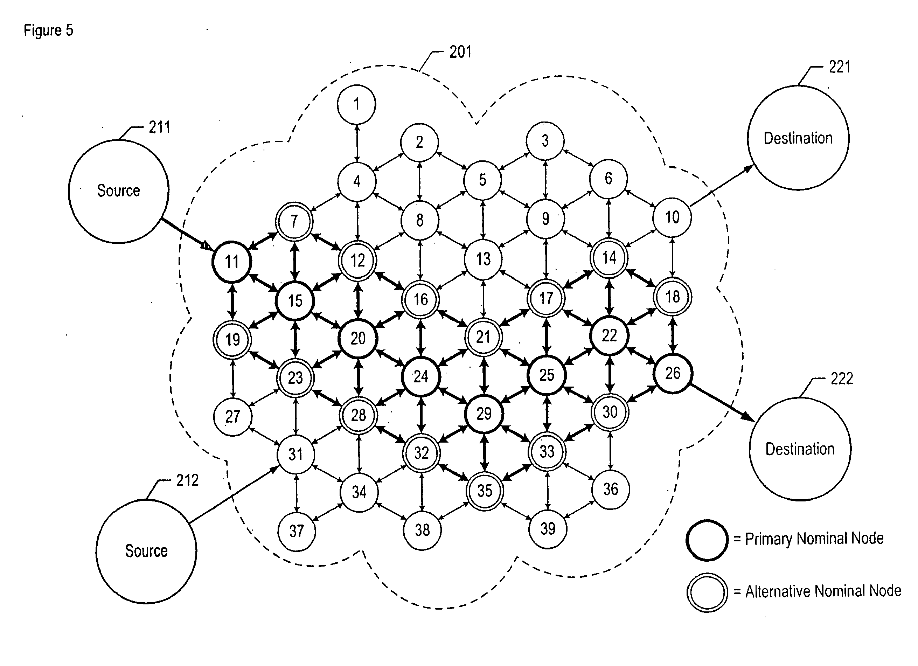

Figure 5 depicts the primary nominal path and all of the alternative nominal paths through network 201 from source node 211 to destination node 222. For the purposes of this specification, a node in a network that is with the subgraph of nominal paths is defined as a "nominal path node" and a node that is not within the subgraph of nominal paths is defined as an **"extranominal path node."**

The resources of a network have the topology of a graph, and the primary and alternative nominal paths have the topology of a subgraph. This significance of this is that the network itself, in the prior art and without the advantage of the present invention, provides a degree of robustness - with respect to bandwidth, error rate, and latency - within the subgraph of nominal paths, but not generally enough for some applications. In contrast, the illustrative embodiment uses both nominal and extranominal path nodes to increase the likelihood that the quality of service goals for the packet are achieved.

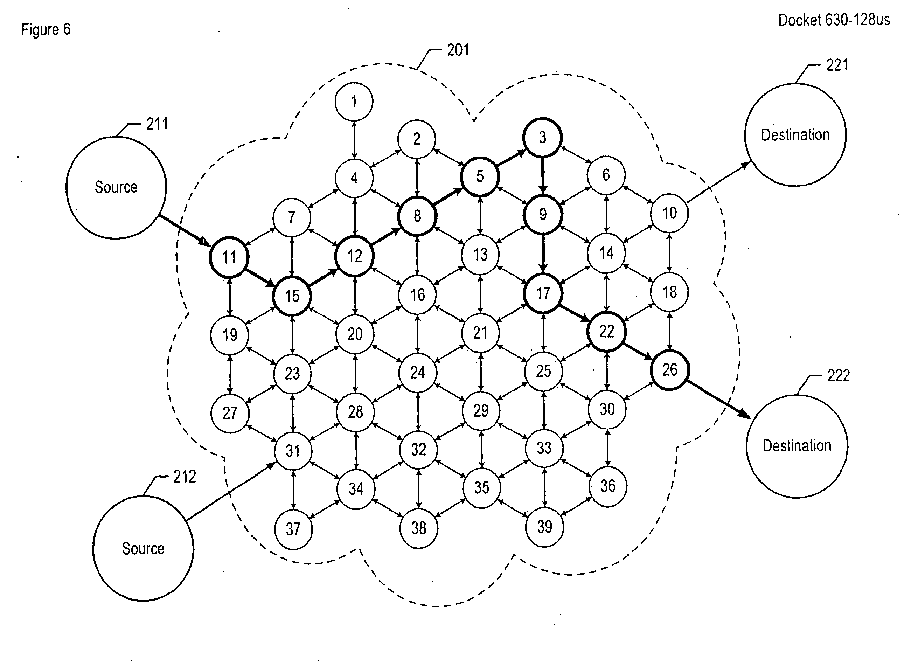

Figure 6 depicts the use of extranominal path node 3 as a ricochet node for a packet that leaves source node 211 for destination node 222. In this case, the packet takes a first nominal path (either primary or alternative) from source node 211 to node 3 and then a second nominal path (either primary or alternative) to destination node 222. In other words, source node 211 does not control the path that the packet takes on its way to node 3, nor its path from node 3 to destination node 222. The packet takes one of the nominal paths from source node 211 to node 3, and a different nominal path from node 3 to destination 222. The path from source node 211 to destination node 222 through node 3 is, however, indirect in contrast to one of the nominal paths from source node 211 to destination node 222 because source node 211 specifies node 3 in the packet's path. In other words, when source node 211 specifies an intermediate or ricochet node in the packet's path on its way to destination 222, the packet is taking an indirect path - regardless of whether or not the ricochet node is a nominal path node or not.

For the purposes of this specification, the term **"indirect"** path is defined as a path from a source node to a destination node with a specified intermediate node, regardless of whether or not the intermediate node is a nominal path node or not. Some, but not all, indirect paths are nominal paths. Conversely, and for the purposes of this specification, the term **"direct"** path is defined as a path from a source node to a destination node without a specified intermediate node. All direct paths are nominal paths.

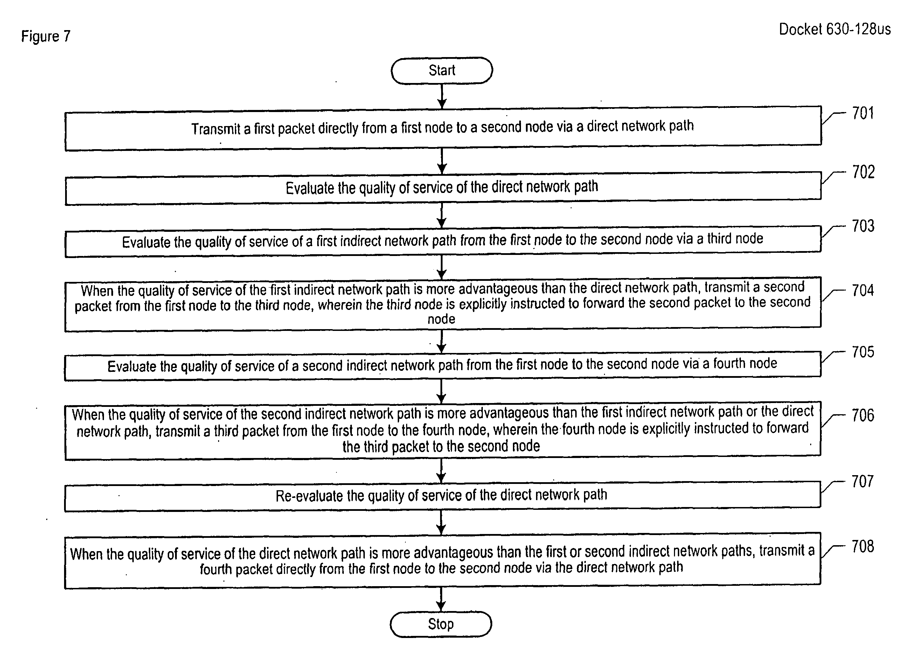

Figure 7 depicts a flowchart of the salient tasks associated with the operation of the illustrative embodiment of the present invention.

At task 701, source node 211 transmits a first packet to destination node 222 through a direct path in well-known fashion.

At task 702, source node 211 evaluates the quality of service of a path from source node 211 to destination node 222 through the direct path. As is well known to those skilled in the art, the quality of service of the direct path is measured by:
i. bandwidth, or
ii. error rate, or
iii. latency, or
iv. a derivative or associated function of bandwidth, or
v. a derivative or associated function of error rate, or
vi. a derivative or associated function of latency (e.g., jitter, etc.), or
vii. any combination of i, ii, iii, iv, v, and vi.
Source node 211 can, for example, evaluate the quality of service of the direct path by transmitting a time-stamped test packet to destination node 222 with an instruction to destination 222 to time stamp the test packet again and return the results to source node 211.

At task 703, source node 211 evaluates the quality of service of a first indirect network path from source node 211 to destination node 222 through node 3. In this case, node 3 is an extranominal node, but it will be clear to those skilled in the art how to make and use alternative embodiments of the present invention in which node 3 is a nominal path node.

Source node 211 can evaluate the quality of service of a network path by, for example, having source node 211 transmit a time-stamped test packet to node 3 with an instruction to node 3 to forward the packet to destination node 222 with an instruction to destination node 222 to time stamp the test packet again and return the results to source node 211.

As an alternative, both legs of the path through node 3 - from source node 211 to node 3 and from node 3 to destination node 222 - can be evaluated independently. For example, source node 211 can transmit a time-stamped test packet to node 3 with an instruction to node 3 to time stamp the test packet again and return the results to the source node. This would inform source node 211 of the quality of service between it and node 3.

Concurrently, node 3 could transmit a time-stamped test packet to destination node 222 with an instruction to time stamp the test packet again and to return the results to node 3. This would inform node 3 of the quality of service between it and destination node 222. Node 3 could then transmit the measured quality of service parameters between it and destination node 222 to source node 211. Source node 211 could combine the information it received from node 3 with the information it has to determine the quality of service of both legs of the path from it to destination node 222 through node 3. It will be clear to those skilled in the art, after reading this specification, how to make and use embodiments of the present invention that perform task 701.

At task 704, when the quality of service of the first indirect network path is more advantageous than that of the direct path, source node 211 transmits a second packet from source node 211 to node 3, wherein node 3 is explicitly instructed to forward the second packet to destination node 222. It is well known to those skilled in the art how to instruct node 3 to forward the packet to destination node 222. For example, the packet could itself carry re-direct instruction or, as an alternative, source node 211 could transmits a signaling packet to node 3 to direct it to forward packets from it to destination node 222.

At task 705, source node 211 evaluates the quality of service of a second indirect path from source node 211 to destination node 222 through node 32. In this case, node 32 is a nominal path node, but it will be clear to those skilled in the art, after reading this specification, how to make and use alternative embodiments of the present invention in which node 32 is an extranominal path node. Source node 211 can evaluate the quality of the path from source node 211 to destination node 222 through node 32 in the same or a different manner than it does in task 703.

At task 706, when the quality of service of the second indirect path (through node 32) is more advantageous than the quality of service of the first indirect path (through node 3) or the direct path, source node 211 transmits a third packet from source node 211 to node 32, wherein node 32 is explicitly instructed to forward the second packet to destination node 222. It is well known to those skilled in the art how to instruct node 32 to forward the packet to destination node 222.

At task 707, source node 211 re-evaluates the quality of service of a path from source node 211 to destination node 222 through the direct path.

At task 708, when the quality of service of the direct network path is more advantageous than that of either the first or second indirect paths, source node 211 transmits a fourth packet from source node 211 to destination node 222 through the direct path.

It is to be understood that the above-described embodiments are merely illustrative of the present invention and that many variations of the above-described embodiments can be devised by those skilled in the art without departing from the scope of the invention. It is therefore intended that such variations be included within the scope of the following claims.

## Claims

1. A method comprising:
evaluating the quality of service of a first indirect network path from a first node to a second node through a third node, wherein said first indirect network path fails to provide a quality-of-service guarantee; and
when the quality of service of said first indirect network path is satisfactory, transmitting a first packet from said first node to said third node, wherein said third node is explicitly instructed to forward said first packet to said second node;
wherein an indirect network path is defined as a path from a source node to a destination node with a specified intermediate node, regardless of whether the intermediate node is a nominal path node or not.

2. The method of claim 1 wherein said third node is a nominal path node.

3. The method of claim 1 wherein said third node is an extranominal path node.

4. The method of claim 1 further comprising:
evaluating the quality of service of a second indirect network path from said first node to said second node through a fourth node, wherein said second indirect network path fails to provide a quality-of-service guarantee; and
when the quality of service of said second indirect network path is more advantageous than the quality of service of said first indirect network path, transmitting a second packet from said first node to said fourth node, wherein said fourth node is explicitly instructed to forward said second packet to said second node.

5. The method of claim 4 wherein said fourth node is a nominal path node.

6. The method of claim 4 wherein said fourth node is an extranominal path node.

7. The method of claim 1 further comprising instructing said third node to forward said first packet to said second node through a signaling packet from said first node.

8. The method of claim 4 further comprising:
evaluating the quality of service of a first direct network path from said first node to said second node; and
when the quality of service of said first direct network path is satisfactory, transmitting a third packet directly from said first node to said second node.

## Patentansprüche

1. Ein Verfahren umfassend:
Beurteilen der Dienstgüte eines ersten indirekten Netzwerkpfads von einem ersten Knoten zu einem zweiten Knoten über einen dritten Knoten, wobei dieser erste indirekte Netzwerkpfad eine Dienstgüte nicht garantiert und
wenn die Dienstgüte dieses ersten indirekten Netzwerkpfads zufriedenstellend ist, wird ein erstes Datenpaket vom ersten Knoten zum dritten Knoten übertragen, wobei der dritte Knoten ausdrücklich angewiesen wird, das betreffende erste Datenpaket an den besagten zweiten Knoten weiterzuleiten, wobei
ein indirekter Netzwerkpfad als ein Pfad von einem Quellknoten zu einem Zielknoten mit einem spezifischen Zwischenknoten definiert wird, ungeachtet davon, ob der Zwischenknoten ein Pfad-Nenn-Knoten ist oder nicht.

2. Verfahren nach Anspruch 1 wobei der besagte dritte Knoten ein Pfad-Nenn-Knoten ist.

3. Verfahren nach Anspruch 1 wobei der besagte dritte Knoten kein Pfad-Nenn-Knoten ist.

4. Verfahren nach Anspruch 1 weiter umfassend:
Beurteilen der Dienstgüte eines zweiten indirekten Netzwerkpfads vom besagtem ersten Knoten zum besagten zweiten Knoten über einen vierten Knoten, wobei dieser zweite indirekte Netzwerkpfad eine Dienstgüte nicht garantiert und
wenn die Dienstgüte dieses zweiten indirekten Netzwerkpfads vorteilhafter ist als die Dienstgüte des ersten indirekten Netzwerkpfads, wird ein zweites Datenpaket vom besagten ersten Knoten zum besagten vierten Knoten übertragen, wobei der vierte Knoten ausdrücklich angewiesen wird, das betreffende zweite Datenpaket an den besagten zweiten Knoten weiterzuleiten.

5. Verfahren nach Anspruch 4 wobei der besagte vierte Knoten ein Pfad-Nenn-Knoten ist.

6. Verfahren nach Anspruch 4 wobei der besagte vierte Knoten ein kein Pfad-Nenn-Knoten ist.

7. Verfahren nach Anspruch 1, das darüber hinaus der besagte dritte Knoten angewiesen wird, das erste Datenpaket an den zweiten Knoten über ein Signalisierungspaket vom ersten Knoten weiterzuleiten.

8. Verfahren nach Anspruch 4 weiter umfassend:
Beurteilen der Dienstgüte eines ersten direkten Netzwerkpfads von einem ersten Knoten zu einem zweiten Knoten; und
wenn die Dienstgüte dieses ersten direkten Netzwerkpfads zufriedenstellenden ist wird ein drittes Datenpaket direkt vom ersten Knoten an den zweiten Knoten übermittelt.

## Revendications

1. Procédé comprenant :
l'évaluation de la qualité de service d'un premier trajet indirect de réseau allant d'un premier noeud à un deuxième noeud en passant par un troisième noeud, dans lequel le premier trajet indirect de réseau manque à fournir une garantie de qualité de service ; et
lorsque la qualité de service du premier trajet indirect de réseau est satisfaisante la transmission d'un premier paquet du premier noeud au troisième noeud, le troisième noeud recevant explicitement des instructions d'acheminer le premier paquet au deuxième noeud ;
dans lequel un trajet indirect de réseau est défini comme étant un trajet d'un noeud de source à un noeud de destination avec un noeud intermédiaire spécifié, que le noeud intermédiaire soit un noeud nominal de trajet ou ne le soit pas.

2. Procédé suivant la revendication 1, dans lequel le troisième noeud est un noeud nominal de trajet.

3. Procédé suivant la revendication 1, dans lequel le troisième noeud est un noeud extranominal de trajet.

4. Procédé suivant la revendication 1, comprenant en outre :
l'évaluation de la qualité de service d'un deuxième trajet indirect de réseau allant d'un premier noeud au deuxième noeud en passant par un quatrième noeud, dans lequel le deuxième trajet indirect de réseau manque à fournir une garantie de qualité de service ; et
lorsque la qualité de service du deuxième trajet indirect de réseau est plus avantageuse que la qualité de service du premier trajet indirect de réseau, la transmission d'un deuxième paquet du premier noeud au quatrième noeud, dans lequel le quatrième noeud reçoit explicitement comme instruction d'acheminer le deuxième paquet au deuxième noeud.

5. Procédé suivant la revendication 4, dans lequel le quatrième noeud est un noeud nominal de trajet.

6. Procédé suivant la revendication 4, dans lequel le quatrième noeud est un noeud extranominal de trajet.

7. Procédé suivant la revendication 1, comprenant en outre le fait de donner instructions au troisième noeud d'acheminer le premier paquet au deuxième noeud par l'intermédiaire d'un paquet de signalisation provenant du premier noeud.

8. Procédé suivant la revendication 4, comprenant en outre :
l'évaluation de la qualité de service d'un premier trajet direct de réseau allant du premier noeud au deuxième noeud ; et
lorsque la qualité de service du premier trajet direct de réseau est satisfaisante, la transmission d'un troisième paquet directement du premier noeud au deuxième noeud.
